# EUROPEAN PATENT APPLICATION

(11) **EP 1 683 836 A1**
(43) Date of publication of application: **26.07.2006**
(21) Application number: 06000735.8
(22) Date of filing: 13.01.2006
(51) Int. Cl.: C08L 23/16, C08L 23/10

(54) **Thermoplastic elastomer composition for operating member and molded member obtained by molding the same**

(30) Priority: 21.01.2005 JP 2005014796
(71) Applicant: Mazda Motor Corporation, Aki-gun, Hiroshima 730-8670 (JP)
(72) Inventor: Onishi, Masaaki Mazda Motor Corporation, Hiroshima 730-8670 (JP); Tanaka, Chikara Mazda Motor Corporation, Hiroshima 730-8670 (JP); Yoshida, Kunihiko Mazda Motor Corporation, Hiroshima 730-8670 (JP)
(74) Representative: Müller-Boré & Partner Patentanwälte

(57) **Abstract**

A thermoplastic elastomer composition for an operating member, comprising high-crystalline polypropylene having crystallinity of 95% or more, low-crystalline polypropylene having crystallinity of less than 95%, poly(1-butene), partial-cross-linked olefin family rubber having SP value of 7.5 or more and 8.5 or less, and non-cross-linked olefin family rubber having SP value of 7.5 or more and 8.5 or less. Accordingly, there can be provided the thermoplastic elastomer composition for an operating member and the molded member obtained by molding the same, which can provide the better tactic quality and improve the wear resistance and scratch resistance.

## Description

The present invention relates to a thermoplastic elastomer composition for an operating member, preferably for an operating member used for a vehicle, and a molded member obtained by molding the same.

Conventionally, polyvinyl chloride has been widely used for an operating member or a trim member of a vehicle such as an automotive vehicle, because it provides a good tactile quality. There has been recently, however, the demand for improving the recycle ratio of materials used in vehicles as a part of the protection of environment. The polyvinyl chloride is difficult to recycle, particularly in a burning process, and to improve the recycle ratio. Therefore, other materials than polyvinyl chloride have been required.

Accordingly, in order to satisfy this requirement, a thermoplastic olefin elastomer (TPO) including polypropylene and olefin family rubber, which is advantageous to recycling, has been proposed as alternative materials. There is, however, a problem that a molded member obtained by molding the TPO feels clammy, resulting in a poor tactile quality.

Accordingly, olefin family polymer alloy comprising crystalline polypropylene, nonpolar thermoplastic elastomer, and acrylate-styrene-acrylonitrile terpolymer has been proposed to improve this clamminess, as disclosed, for example, in Japanese Patent Application Laid-Open No. 9-208763.

Also, thermoplastic elastomer comprising polypropylene, poly(1-butene), olefin family rubber, whose content ratio is properly adjusted to improve the tactile quality, has been also proposed, as disclosed, for example, in US Patent Application Publication No. 2004/0157998 A1.

The above-described compositions, however, still have problems. Namely, although they could provide the good tactile quality in the case where they are used for the armrest or the like that passengers do not touch often, the operating member for which the above-described compositions are used for, such as a change knob (shift lever), which the passengers touch and grip often, would feel clammy. Frequent touching or griping may need a severer requirement in the tactile quality, so there was some room to make improvements.

Also, in the case where they are used for the operating member that the passengers touch and grip often, a wear resistance, or a scratch resistance for scratching with nails were also required. The above-described compositions, however, would not provide good wear resistance and scratch resistance either.

The present invention has been devised in view of the above-described problems, and an object of the present invention is to provide a thermoplastic elastomer composition for an operating member and a molded member obtained by molding the same, which can provide a better tactic quality and improve the wear resistance and scratch resistance.

The above-described object is solved according to the present invention by a thermoplastic elastomer composition for an operating member of claim 1, and by a molded member obtained by molding the same of claim 6. Preferred embodiments are subject of the dependent claims.

According to the present invention, there is provided a thermoplastic elastomer composition for an operating member, comprising high-crystalline polypropylene having crystallinity of 95% or more, low-crystalline polypropylene having crystallinity of less than 95%, poly(1-butene), partial-cross-linked olefin family rubber having SP value of 7.5 or more and 8.5 or less, and non-cross-linked olefin family rubber having SP value of 7.5 or more and 8.5 or less.

The SP value is calculated according to the following expression:
SP value = [(H25-596)xD/MW]^{½}
H25: latent heat of evaporation per mol at 25°C
D: density (g/cm³)
MW: molecular mass
(cf. also "http://wwwsoc.nii.ac.jp/jpi/dictionary/petdicsolvent.html#solubility2").

Namely, the high-crystalline polypropylene is superior to the low-crystalline polypropylene in providing a molded member having a rather dry feeling and an excellent wear resistance. Accordingly, the composition including a proper content of the high-crystalline polypropylene can provide a good tactile quality and improve the wear resistance. Also, these high-crystalline polypropylene and low-crystalline polypropylene do not produce any environment burden materials in burning processes and thereby can improve the recycle ratio as well.

Also, the poly(1-butene) has a smaller elastic modulus and is softer than the polypropylene, and has a high restorable characteristic with a long side chain group. Accordingly, the molded member obtained by molding the composition including the poly(1-butene) has an excellent scratch resistance. Further, the SP (Solubility Parameter) value of the poly(1-butene) is 8.3 which is nearly equal to the SP value of the polypropylene (SP value = 8.1). Accordingly, the compatibility (easiness in mixing) between the poly(1-butene) and the polypropylene is high, so that these are well mixed in molding and uniform resin layers can be formed.

Further, the SP value of the partial-cross-linked olefin family rubber, such as ethylenepropylene-diene-monomer (EPDM), and the non-cross-linked olefin family rubber, such as ethylene octane rubber (EOR) and propylene butene rubber (PBR), is 7.5 or more and 8.5 or less. Accordingly, these are well mixed with and well spread or well dispersed in the above-described resins in molding, so that the molded member obtained by molding this composition can feel dry properly. Poor compatibility with the resins produces large rubber masses in a surface portion of the molded member, which may cause the clammy feeling. According to the present invention, however, since the partial-cross-linked olefin family rubber and the non-cross-linked olefin family rubber, which have better compatibility with the resins, are well dispersed or spread in the resins, the particle size of the partial-cross-linked olefin family rubber and non-cross-linked olefin family rubber that are located in the surface portion of the molded member becomes so small that the molded member feels dry properly. Also, in the case where PBR is used as the non-cross-linked olefin family rubber, PBR has the high restorable characteristic with the long side chain group. Accordingly, the scratch resistance of the molded member can be further improved.

Thus, the molded member obtained by molding the above-described composition can provide a good tactile quality without an improper clammy feeling, and improve the wear resistance and scratch resistance, so that it can be very suitable to the operating member.

According to an embodiment of the present invention, a total content of the high-crystalline polypropylene and low-crystalline polypropylene is 7 mass % or more and 25 mass % or less.

Namely, when the total content of the high-crystalline polypropylene and low-crystalline polypropylene is less than 7 mass %, the molded member does not keep its shape properly because the rest of those is made of liquid and rubber, and it is difficult to provide a good tactile quality with properly dry feeling. Meanwhile, when the total content of those is more than 25 mass %, the molded member becomes too hard. Accordingly, it is necessary to increase the amount of mineral oil or the like that is generally added to prevent the molded member from becoming hard. Increasing of this oil or the like increases clamminess. Therefore, the total content of 7 mass % or more and 25 mass % or less can provide the good tactile quality.

According to another embodiment of the present invention, a weight ratio of the high-crystalline polypropylene to the total content of the high-crystalline polypropylene and low-crystalline polypropylene is 50 % or more and 70 % or less.

Namely, when the weight ratio of the high-crystalline polypropylene to the total content of the high-crystalline polypropylene and low-crystalline polypropylene is less than 50 %, it is difficult to provide the dry feeling to the molded member. Meanwhile, when that weight ratio is more than 70 %, the molded member becomes too hard, and the oil added for adjusting hardness increases clamminess improperly. Therefore, the weight ratio of the high-crystalline polypropylene to the total content of 50 % or more and 70 % or less can provide the good tactile quality without improperly clammy feeling, and the extremely excellent wear resistance.

According to another embodiment of the present invention, the content of the poly(1-butene) is 10 mass % or more and 35 mass % or less.

Namely, when the content of the poly(1-butene) is less than 10 mass %, the molded member becomes too hard, and the oil added for adjusting hardness increases the clamminess improperly. Meanwhile, when that content is more than 35 mass %, the molded member does not keep its shape properly and it is difficult to provide the good tactile quality with properly dry feeling, and the wear resistance and scratch resistance are not improved sufficiently. Therefore, the content of the poly(1-butene) of 10 mass % or more and 35 mass % or less can provide a good tactile quality without improperly clammy feeling and an extremely excellent wear and scratch resistance.

According to another embodiment of the present invention, each particle size of the partial-cross-linked olefin family rubber and non-cross-linked olefin family rubber is 0.1 µm or more.

Thus, it is not necessary to take any particular steps to make the rubber minute, so manufacturing costs can be reduced. Further, since the partial-cross-linked olefin family rubber and the non-cross-linked olefin family rubber are well spread in the resins in molding as described above, the properly dry feeling can be obtained.

According to a preferred embodiment of the present invention, the preferred content of the partial-cross-linked olefin family rubber is in a range of about 23 mass% to about 40 mass%. The preferred content of the non-cross-linked olefin family rubber is in a range of about 9 mass% to about 18 mass%.

According to the present invention, there is further provided a molded member obtained by molding the above-described thermoplastic elastomer composition for an operating member, wherein an average coefficient of friction of a surface of the member is 0.23 or less.

Thus, the molded member whose surface's average coefficient of friction is 0.23 or less can provide a good tactile quality without improperly clammy feeling. This molded member having the good tactile quality can be obtained easily by molding the above-described thermoplastic elastomer composition for an operating member, by a general molding process, such as an injection molding.

According to another embodiment of the present invention, the particle size of a rubber particle comprising the partial-cross-linked olefin family rubber and the non-cross-linked olefin family rubber is 0.1 µm or more, and a maximum particle size of the rubber particle that is located in a surface portion of the member is 3 µm or less.

Thus, if the particle size of the partial-cross-linked olefin family rubber and non-cross-linked olefin family rubber is 0.1 µm or more, like the above-described embodiment, the particle size of the rubber particles of the molded member comprising the partial-cross-linked olefin family rubber and the non-cross-linked olefin family rubber is 0.1 µm or more. Accordingly, the same function and effect as that of the above-described embodiment can be obtained. Further, the maximum particle size of 3 µm or less of the rubber particles located in the member's surface portion can provide the dry feeling more properly. Herein, since SP values of the partial-cross-linked olefin family rubber and the non-cross-linked olefin family rubber are 7.5 or more and 8.5 or less, the partial-cross-linked olefin family rubber and the non-cross-linked olefin family rubber are well spread in the resins in molding and thereby the maximum particle size of the rubber particles can become 3 µm or less easily.

According to another embodiment of the present invention, the molded member is an operating member for a vehicle.

Thus, the molded member of the present invention is applied to the operating member for a vehicle in which the recycle ratio is particularly required, so the more preferable application of the present invention can be attained.

Other features, aspects, and advantages of the present invention will become apparent from the following description which refers to the accompanying drawings.
FIG. 1 is a schematic diagram illustrating a friction test apparatus to conduct a friction characteristic test.
FIG. 2 is a schematic diagram illustrating a scratch test apparatus to conduct a scratch resistance test.
FIG. 3 is a graph showing relationships between a total content of high-crystalline polypropylene and low-crystalline polypropylene and an average coefficient of friction.
FIG. 4 is a graph showing relationships between the total content of the high-crystalline polypropylene and low-crystalline polypropylene and a grade of a wear resistance.
FIG. 5 is a graph showing relationships between the total content of the high-crystalline polypropylene and low-crystalline polypropylene and a grade of a scratch resistance.
FIG. 6 is a graph showing relationships between a ratio of the high-crystalline polypropylene to the total content of the high-crystalline polypropylene and low-crystalline polypropylene and the average coefficient of friction.
FIG. 7 is a graph showing relationships between the ratio of the high-crystalline polypropylene to the total content of the high-crystalline polypropylene and low-crystalline polypropylene and the grade of the wear resistance.
FIG. 8 is a graph showing relationships between the ratio of the high-crystalline polypropylene to the total content of the high-crystalline polypropylene and low-crystalline polypropylene and the grade of the scratch resistance.
FIG. 9 is a graph showing relationships between the content of poly(1-butene) and the average coefficient of friction.
FIG. 10 is a graph showing relationships between the content ofpoly(1-butene) and the grade of the wear resistance.
FIG. 11 is a graph showing relationships between the content of poly(1-butene) and the grade of the scratch resistance.
FIG. 12 is a photomicrograph showing a cross section of a surface portion of a molded member of Example 1.
FIG. 13 is a photomicrograph showing a cross section of a surface portion of a molded member of Comparative Sample 4.

Hereinafter, preferred embodiments of the present invention will be described referring to the accompanying drawings.

A thermoplastic elastomer composition for an operating member according to an embodiment of the present invention comprises high-crystalline polypropylene having crystallinity of 95% or more, low-crystalline polypropylene having crystallinity of less than 95%, poly(1-butene), partial-cross-linked olefin family rubber having an SP value (Solubility Parameter) of 7.5 or more and 8.5 or less, and non-cross-linked olefin family rubber having the SP value of 7.5 or more and 8.5 or less. Herein, in general mineral oil is added, and silicone oil may be added additionally.

It is preferable that the total content of the high-crystalline polypropylene and low-crystalline polypropylene is 7 mass % or more and 25 mass % or less. The reason for this is as follow. When the total content of those is less than 7 mass %, the molded member does not keep its shape properly because the rest of those is made of liquid and rubber, and it is difficult to provide the good tactile quality with properly dry feeling. Meanwhile, when the total content of those is more than 25 mass %, the molded member becomes too hard, and accordingly it is necessary to increase the amount of mineral oil that is generally added to prevent the molded member from becoming hard. This increasing of this oil, however, results in being improperly clammy.

Also, it is preferable that the weight ratio of the high-crystalline polypropylene to the total content of the high-crystalline polypropylene and low-crystalline polypropylene is 50 % or more and 70 % or less. Because, the high-crystalline polypropylene is superior to the low-crystalline polypropylene in providing a molded member having the rather dry feeling and the excellent wear resistance. Accordingly, when the weight ratio of the high-crystalline polypropylene to the total content of those is less than 50 %, it is difficult to provide the dry feeling to the molded member and the wear resistance is not improved sufficiently. Meanwhile, when that weight ratio is more than 70 %, the molded member becomes too hard, and the oil, particularly the mineral oil, which is added for adjusting hardness, increases clamminess improperly. Herein, it may be preferable from a cost reduction aspect that the content of the high-crystalline polypropylene is as less as possible.

The poly(1-butene) is in the form of a liquid, and generally used as a plasticizer, a material to increase viscosity, or a material to add stickiness. The poly(1-butene) has smaller elastic modulus and is softer than the polypropylene, and has the high restorable characteristic with the long side chain group. Accordingly, its molded member has the excellent scratch resistance. Further, since SP value of the poly(1-butene) is 8.3 which is nearly equal to SP value of the polypropylene (SP value = 8.1), the compatibility between the poly(1-butene) and the polypropylene is high, so that these are well mixed in molding and uniform resin layers are formed. It is preferable that the content of the poly(1-butene) is 10 mass % or more and 35 mass % or less. The reason for this is as follows. When the content is less than 10 mass %, the molded member becomes too hard, and the oil, particularly the mineral oil, which is added for adjusting the hardness, increases the clamminess improperly. Meanwhile, when that content is more than 35 mass %, the molded member does not keep its shape properly and it is difficult to provide the good tactile quality with properly dry feeling, and the wear resistance and the scratch resistance are not improved sufficiently.

The partial-cross-linked olefin family rubber is, for example, ethylene-propylene-diene-monomer (EPDM). SP value of EPDM is 8.0 and well mixable with the above-described resins.

The non-cross-linked olefin family rubber is, for example, ethylene octane rubber (EOR) or propylene butene rubber (PBR). SP value of EOR or PBR is 8.1 and well mixable with the above-described resins as well. Also, since EOR can be added together with EPDM in the same step in molding, the manufacturing costs can be reduced. PBR has the high restorable characteristic with the long side chain group, so the scratch resistance of the molded member can be further improved.

Any partial-cross-linked olefin family rubber and any non-cross-linked olefin family rubber are applicable as long as they have SP value of 7.5 or more and 8.5 or less. SP value of 7.5 or more and 8.5 or less allows the rubber to mix well with the above-described resins in molding, so the rubber can be spread well in those. As a result, the good tactile quality with properly dry feeling can be obtained. Namely, the poor compatibility with the resin produces large rubber masses in the surface portion of the molded member, which may cause the clammy feeling. When SP values of the partial-cross-linked olefin family rubber and non-cross-linked olefin family rubber are 7.5 or more and 8.5 or less, however, the partial-cross-linked olefin family rubber and non-cross-linked olefin family rubber are well spread in the resins in molding, and thereby the maximum particle size of the rubber particles located in the molding member's surface portion, which are comprised of the partial-cross-linked olefin family rubber and non-cross-linked olefin family rubber, becomes 3 µm or less. Thus, the properly dry feeling can be obtained.

It is preferable that each particle size of the partial-cross-linked olefin family rubber and the non-cross-linked olefin family rubber is 0.1 µm or more. Because, it is not necessary to take any particular steps to make the rubber minute, so manufacturing costs can be reduced. Further, as described above, the partial-cross-linked olefin family rubber and non-cross-linked olefin family rubber are well spread in the resins in molding, so the properly dry feeling can be surely obtained as well.

It is preferable that the content of the mineral oil is 15 mass % or more and 24 mass % or less.

A molded member of the present invention can be obtained by molding the above-described thermoplastic elastomer composition for an operating member, by the general molding process, such as the injection molding. An average coefficient of friction of a surface of the molded member is 0.23 or less, so this molded member can provide the good tactile quality without improperly clammy feeling. The more preferable average coefficient of friction is 0.17 or less.

It is preferable that the particle size of the rubber particles comprising the partial-cross-linked olefin family rubber and non-cross-linked olefin family rubber in the above-described molded member is 0.1 µm or more, and the maximum particle size of the rubber particles located in the surface portion of the member is 3 µm or less. If the particle size of the partial-cross-linked olefin family rubber and the non-cross-linked olefin family rubber is 0.1 µm or more, the particle size of the rubber particles of the molded member is likewise 0.1 µm or more. Further, the partial-cross-linked olefin family rubber and non-cross-linked olefin family rubber are well spread in the resins in molding, so the maximum particle size of the rubber particles becomes 3 µm or less easily.

The above-described molded member is preferably applicable to any operating members for a vehicle, such as a change knob or a parking brake lever, which are touched or gripped often by a passenger. Thus, such molded members can provide the good tactile quality without improperly clammy feeling and the excellent wear and scratch resistances, so they are very suitable.

### EXAMPLE

Hereinafter, some examples that were carried out will be described.

As shown in Table 1, Examples 1 through 3 of molded members (flat plates) were obtained by molding three kinds of compositions according to the present invention. EPDM was used as the partial-cross-linked olefin family rubber and PBR was used as the non-cross-linked olefin family rubber.

Meanwhile, Comparative Examples 1 through 4 of molded members, as shown in Table 1, were obtained for comparison by molding four kinds of compositions not comprising the high-crystalline polypropylene (denoted by "High-crystal PP" in Table 1). Herein, EOR was used as non-cross-linked olefin family rubber (Example 4 does not comprise non-cross-linked olefin family rubber, though), but low-crystalline polypropylene (denoted by "Low-crystal PP" in Table 1), the poly(1-butene) (denoted by "PB" in Table 1), EPDM, the mineral oil, and the silicone oil were comprised in the same manner as Examples 1 through 3.

**Table 1**

| | Low-crystal PP mass % | High-crystal PP mass % | Low-crystal PP + High-crystal PP mass % | High-crystal PP/ (Low-crystal PP+ High-crystal PP) mass % | PB mass % | EPDM mass % | EOR mass % | PBR mass % | Mineral oil mass % | Silicone oil mass % |
|---|---|---|---|---|---|---|---|---|---|---|
| Example 1 | 8 | 10 | 18 | 57.2 | 21 | 26 | 0 | 15 | 18 | 2 |
| Example 2 | 8 | 16 | 23 | 66.8 | 21 | 26 | 0 | 10 | 18 | 2 |
| Example 3 | 8 | 5 | 13 | 39.8 | 21 | 26 | 0 | 21 | 18 | 2 |
| Comparative Sample 1 | 9 | 0 | 9 | 0 | 21 | 41 | 8 | 0 | 19 | 2 |
| Comparative Sample 2 | 6 | 0 | 6 | 0 | 39 | 20 | 19 | 0 | 14 | 2 |
| Comparative Sample 3 | 5 | 0 | 5 | 0 | 39 | 22 | 19 | 0 | 13 | 2 |
| Comparative Sample 4 | 15 | 0 | 15 | 0 | 18 | 44 | 0 | 0 | 21 | 2 |

The friction characteristic test, wear resistance test and scratch resistance test were conducted with respect to respective molded members of the above-described Examples 1 through 3 and Comparative Samples 1 through 4 to examine the average coefficient of friction, wear resistance and scratch resistance of the surfaces of these members.

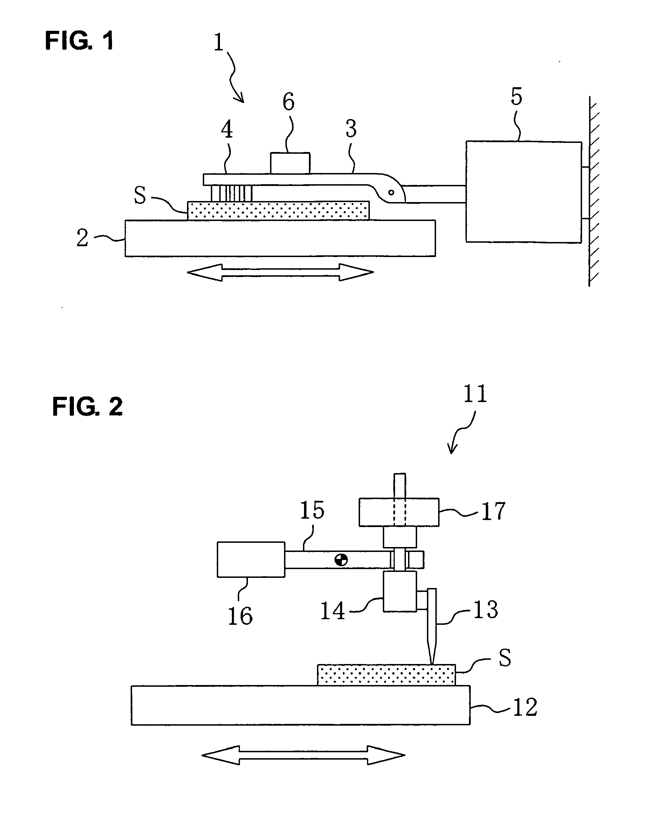

The friction characteristic test was conduced by using a friction test apparatus 1 (KES friction tester) illustrated in FIG. 1. Herein, in this friction test apparatus 1, sample S of the molded member was placed on and fixed to a sample table 2, and then a contact 4 that was attached to the tip of an arm 3 was provided to contract the upper surface of the sample S. Around the contact 4 was wound a piano wire, which is made contact the upper surface by a weight 6 that was placed on the arm 3. At a base of the arm 3 was provided a friction force sensor 5. Herein, as the table 2 was reciprocated in the horizontal surface along the longitudinal direction of the arm 3, a friction force was generated between the upper surface of the sample S and the piano wire provided at the contact 4. This friction force was measured by the friction force sensor 5. Thereby, the average coefficient of friction of the surface of the sample S was measured. Herein, the friction force generated between the upper surface of the sample S and the piano wire provided at the contact 4 can be changed according to a weight of the weight 6 on the arm 3. The load in a unit area applied by the contact 4 to the sample S was set to 2.0x10⁴ Pa, and the moving speed of the table 2 was set to 1 mm/sec.

Further, organoleptic evaluation of the tactile quality was conducted in addition to the above-described friction characteristic test. In this organoleptic evaluation, with respect to each of samples, four feeling factors, that is, a humidity feeling (whether it feels clammy or dry), a texture feeling (whether it feels smooth or rough), a temperature feeling (whether it feels warm or cool) and a hardness feeling (whether it feels soft or hard), were examined. As an evaluation method, "the paired comparison method" that is easy to understand for a subject in which the subject can easily grasp relationships between the samples was employed. By this method, all the 30 subjects evaluated each sample with respect to the above-described four feeling factors. Thereafter, with respect to each sample, all data were statistically processed for digitizing (scoring) the evaluation results of each feeling factor, which is regarded as an index of the evaluation results. Herein, the load in a unit area applied when the subject's finger touches the sample was set to about 2.0x10⁴ Pa, and the moving speed was set to 10 mm/sec or less. The above-described friction characteristic test is considered to indicate the feeling factors of the humidity feeling and the texture feeling.

The above-described wear resistance test was conducted by using the type-II friction test device disclosed in JIS L 0823, and a 3000-time-reciprocating friction with a load of 4.9 N (0.5 kgf) and with a reciprocating speed of 100 mm/sec was applied to each sample of molded members. Then, the surface of each sample S was examined by the observation with eyes, and observation results were obtained with the following standard of grade.

The standard of grade was as follows.
Grade 5.0 - - - No change in gloss of the grain side was observed.
Grade 4.5
Grade 4.0 - - - Some change in gloss of the grain side was observed.
Grade 3.5
Grade 3.0 - - - A convex surface of the grain side was eroded.
Grade 2.5
Grade 2.0 --- A concave surface of the grain side was eroded.
Grade 1.5
Grade 1.0 - - - Observation of the grain side can not be done.

The above-described scratch resistance test was conducted by using a scratch test apparatus 11 illustrated in FIG. 2. Herein, in this scratch test apparatus 1, sample S of the molded member was placed on and fixed to a sample table 12, and then a contact 13 was provided to contract the upper surface of the sample S. The contact 13, which was designed to imitate the human's nail, was made of ABS (acrylonitrile-butadiene-styrene) resin having hardness of 103. Its tip end was of a circular shape having a diameter of 2 mm. The contact 13 was attached to a load applying member 14 that was movably supported vertically on a fixed member, not illustrated. This load applying member 14 was coupled to one end of a balance lever 15, and to the other end of the balance lever 15 was fixed a counterweight 16. A weight 17 can be placed at the upper surface of the load applying member 14, so that the load of the contact 13 applied to the sample S was adjustable according to the weight 17. Namely, at first the load applying member 14 and the like was balanced with the counterweight 16, and then the weight of the weight 17 was adjusted so that the contact 13 just contacts the upper surface of the sample S. From this state, the weight of the weight 17 was increased by 0.1 kg so that the above-described load can be 0.98 N (0.1 kgf). Then, the table 12 was reciprocated at the speed of 200 mm/s. After the 100-time reciprocating scratch was conducted, the upper surface of the sample S was examined by the observation with eyes, and observation results of the scratch resistance test were obtained with the same standard of grade as the wear resistance test.

The results of the above-described tests are shown in Table 2. Herein, "o" in a column of the average coefficient of friction means that "good" result was obtained in the organoleptic evaluation of feelings (humidity feeling and texture feeling). Likewise, "Δ" means that "rather good" result was obtained, and "x" means that "bad" result was obtained. Also, "O" "Δ" and "x" in the columns of the wear resistance and the scratch resistance mean respectively evaluation results based on the above-described standard of grade. Namely, in the wear resistance, when the grade was 3.3 or more, the evaluation result was "O", when the grade was 2.7 or more and less than 3.0, it was "Δ", and when the grade was less than 2.7, it was "x". Meanwhile, in the scratch resistance, when the grade was 4.1 or more, the evaluation result was "O", when the grade was 3.5 or more and less than 4.1, it was "Δ", and when the grade was less than 3.5, it was "x". The reason why a standard of the scratch resistance is severer than that of the wear resistance is that users tend to recognize the scratch resistance of the molded member with ease compared with the wear resistance.

**Table 2**

| | Hardness | Minimum Rubber Particle Size µm | Maximum Rubber Particle Size in the Surface Portion µm | Average Friction Coefficient | Wear Resistance (grade) | Scratch Resistance (grade) |
|---|---|---|---|---|---|---|
| Example 1 | 92 | 0.1 | 3.0 | 0.13 O | 3.3 O | 4.0 Δ |
| Example 2 | 90 | - | - | 0.11 O | 3.5 O | 4.5 O |
| Example 3 | 90 | - | - | 0.17 O | 3.2 O | 4.0 Δ |
| Comparative Sample 1 | 80 | 0.3 | 2.5 | 0.23 Δ | 2.7 Δ | 3.8 Δ |
| Comparative Sample 2 | 90 | - | - | 0.26 × | 2.7 Δ | 3.7 Δ |
| Comparative Sample 3 | 90 | - | - | 0.28 × | 2.7 Δ | 3.7 Δ |
| Comparative Sample 4 | 81 | 0.3 | 6.0 | 0.46 × | 2.0 × | 2.8 × |

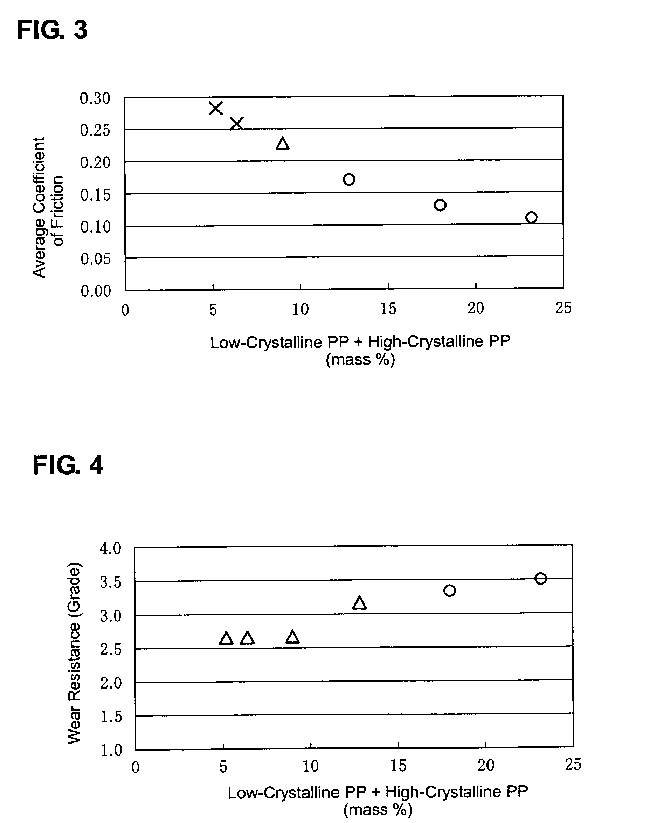

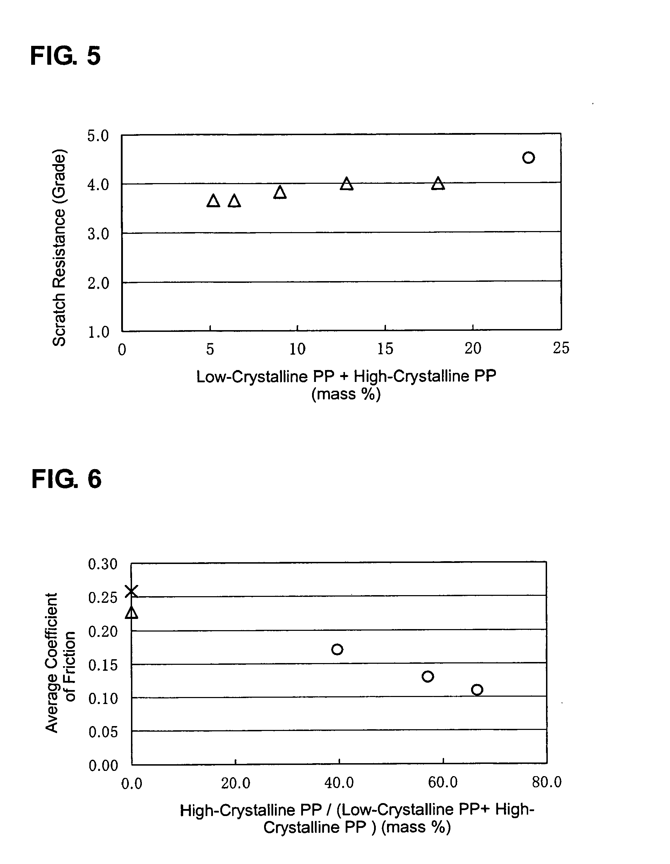

FIG. 3 is a graph obtained by plotting relationships between the total content of the high-crystalline polypropylene and low-crystalline polypropylene and the average coefficient of friction based on results shown in Table 2. FIG. 4 is a graph obtained by plotting relationships between the total content of the high-crystalline polypropylene and low-crystalline polypropylene and the grade of the wear resistance based on the results shown in Table 2. FIG. 5 is a graph obtained by plotting relationships between the total content of the high-crystalline polypropylene and low-crystalline polypropylene and the grade of a scratch resistance based on the results shown in Table 2.

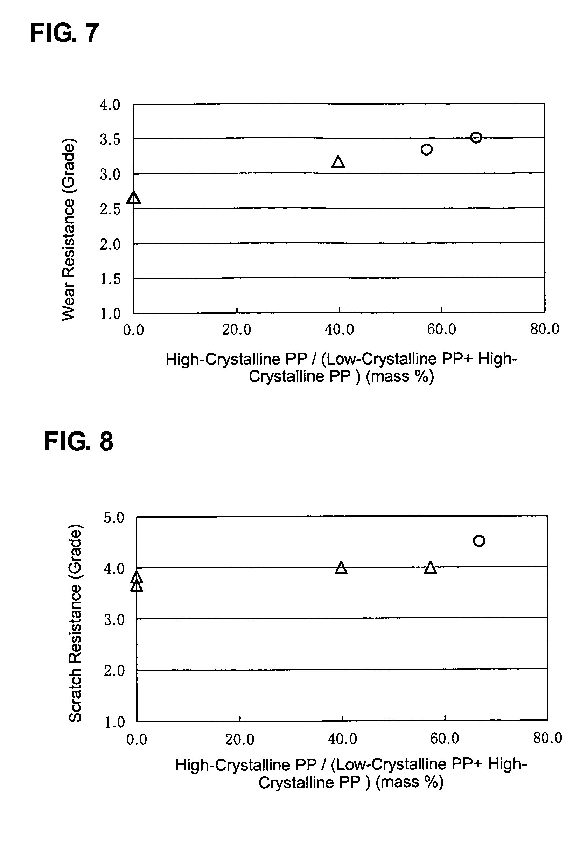

Also, FIG. 6 is a graph obtained by plotting relationships between a ratio (mass %) of the high-crystalline polypropylene to the total content of the high-crystalline polypropylene and low-crystalline polypropylene and the average coefficient of friction based on the results shown in Table 2. FIG. 7 is a graph obtained by plotting relationships between this ratio and the grade of the wear resistance based on the results shown in Table 2. FIG. 8 is a graph obtained by plotting relationships between this ratio and the grade of the scratch resistance based on the results shown in Table 2.

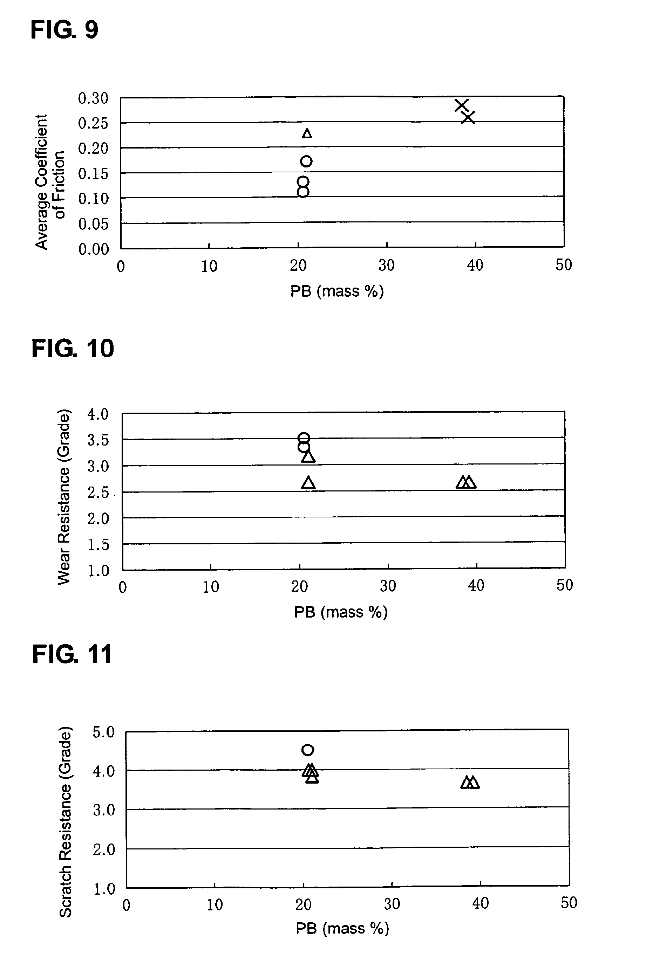

Further, FIG. 9 is a graph obtained by plotting relationships between the content (mass %) of the poly(1-butene) and the average coefficient of friction based on the results shown in Table 2. FIG. 10 is a graph obtained by plotting relationships between this content and the grade of the wear resistance based on the results shown in Table 2. FIG. 11 is a graph obtained by plotting relationships between this content and the grade of the scratch resistance based on the results shown in Table 2.

Herein, "O", "Δ" and "x" in FIGS. 3, 6 and 9 correspond to "○", "Δ" and "x" in the column of the average friction coefficient of Table 1, respectively. And, "O", "Δ" and "x" in FIGS. 4, 7 and 10 correspond to "O", "Δ" and "x" in the column of the wear resistance of Table 1, respectively. Further, "O", "Δ" and "x" in FIGS. 5, 8 and 11 correspond to "O", "Δ" and "x" in the column of the scratch resistance of Table 1, respectively.

According to the above-described results of the friction characteristic test and the organoleptic evaluation, it was found that the molded member having the average friction coefficient of 0.23 or less provided the "rather good" evaluation; the good tactile quality without improperly clammy feeling. Herein, the molded member having the average friction coefficient of 1.7 or less provides the "good" evaluation, which was very preferable.

Also, according to FIGS. 3 through 5, it was found that when the total content of the high-crystalline polypropylene and low-crystalline polypropylene was 7 mass % or more and 25 mass % or less, the average friction coefficient becomes 0.23 or less and the wear resistance and scratch resistance were improved.

Further, according to FIGS. 6 through 8, it was found that when the weight ratio of the high-crystalline polypropylene to the total content of the high-crystalline polypropylene and low-crystalline polypropylene was 50 % or more and 70 % or less, the average friction coefficient becomes 0.17 or less and the wear resistance and scratch resistance were improved. In particular, the wear resistance showed a great improvement.

Furthermore, according to FIGS. 9 through 11, it was found that when the content of the poly(1-butene) was 10 mass % or more and 35 mass % or less, the average friction coefficient became 0.23 or less and the wear resistance and scratch resistance were improved.

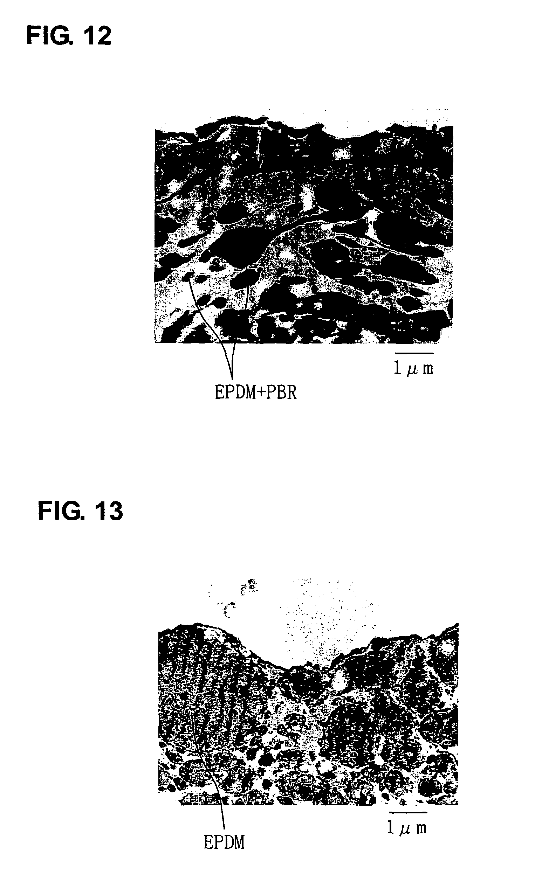

Also, the cross section of respective molded members of the above-described Example 1, Comparative Samples 1 and 4 were observed with a microscope to measure the particle size of rubber particles (rubber particles made of EPDM and PBR or EOR) located at the surface of the molded member. The measured minimum and maximum particle sizes are shown in Table 2 as well. Actual photomicrographs taken of the Example 1 and Comparative Sample 4 are shown in FIGS. 12 and 13, respectively. Herein, an object that extended on the surface of the member and looks black in the photomicrograph of FIG. 12 was an adhesive material to attach the molded member for the microscope observation, which was not the object constituting the subject molded member.

As a result of the observation of Comparative Sample 4, comparatively large rubber masses were present at the surface of the molded member, which may provide the clammy feeling. Meanwhile, the maximum size of the rubber particle of Example 1 was 3 µm, and these small rubber particles were well spread in the resin (corresponding to white portions in the photomicrograph). Thus, the dry feeling may be provided.

Also, the hardness of respective molded members of Examples 1 through 3 and Comparative Samples 1 through 4 were examined. Results of these are also shown in Table 2. Comparative Sample 2 and 3 had the same level of hardness as Examples 1 through 3 with a small content of the mineral oil. It was found, however, that this simply-increasing hardness could not provide the superior molded member that had the good tactile quality without improperly clammy feeling and the improved wear resistance and scratch resistance, like Examples 1 through 3.

Although the preferred embodiments of the present invention has been described above, of course the present invention should not be limited to this embodiment and any other modifications and improvements may be applied within the scope of a sprit of the invention.

## Claims

1. A thermoplastic elastomer composition for an operating member, comprising:
high-crystalline polypropylene having crystallinity of 95% or more;
low-crystalline polypropylene having crystallinity of less than 95%;
poly(1-butene);
partial-cross-linked olefin family rubber having SP value of 7.5 or more and 8.5 or less; and
non-cross-linked olefin family rubber having SP value of 7.5 or more and 8.5 or less.

2. The thermoplastic elastomer composition for an operating member of claim 1, wherein a total content of said high-crystalline polypropylene and low-crystalline polypropylene is 7 mass % or more and 25 mass % or less.

3. The thermoplastic elastomer composition for an operating member of claim 1 or 2, wherein a weight ratio of said high-crystalline polypropylene to the total content of said high-crystalline polypropylene and low-crystalline polypropylene is 50 % or more and 70 % or less.

4. The thermoplastic elastomer composition for an operating member of any one of claims 1 through 3, wherein a content of said poly(1-butene) is 10 mass % or more and 35 mass % or less.

5. The thermoplastic elastomer composition for an operating member of any one of claims 1 through 4, wherein each particle size of said partial-cross-linked olefin family rubber and non-cross-linked olefin family rubber is 0.1 µm or more.

6. A molded member obtained by molding the thermoplastic elastomer composition for an operating member of any one of claims 1 through 5, wherein an average coefficient of friction of a surface of the member is 0.23 or less.

7. The molded member of claim 6, wherein a particle size of a rubber particle comprising said partial-cross-linked olefin family rubber and non-cross-linked olefin family rubber is 0.1 µm or more, and a maximum particle size of the rubber particle that is located in a surface portion of the member is 3 µm or less.

8. The molded member of claim 6 or 7, wherein the molded member is an operating member for a vehicle.
